# EUROPÄISCHE PATENTSCHRIFT

(11) **EP 3 034 442 B1**
(45) Veröffentlichungstag und Bekanntmachung des Hinweises auf die Patenterteilung: **02.08.2017**
(21) Anmeldenummer: 14198640.6
(22) Anmeldetag: 17.12.2014
(51) Int. Cl.: B65G 54/02

(54) **Fördervorrichtung zum Fördern von Produkten**
Device for transporting products
Convoyeur destiné au transport de produits

(43) Veröffentlichungstag der Anmeldung: 22.06.2016
(73) Patentinhaber: UHLMANN PAC-SYSTEME GmbH & Co. KG, 88471 Laupheim (DE)
(72) Erfinder: Aumann, Thomas, 88451 Dettingen (DE); Wegerer, Mathias, 88453 Erolzheim OT Edelbeuren (DE); Rodi, Wolfgang, 88471 Baustetten (DE); Zieher, Daniel, 88444 Ummendorf (DE)
(74) Vertreter: Wächter, Jochen

(56) Entgegenhaltungen:
- EP-A1- 2 088 664
- EP-A2- 0 989 060
- WO-A1-2016/083394
- JP-A- H08 140 331
- JP-A- 2001 057 712
- KR-A- 20030 013 868
- US-A- 5 185 984
- US-A1- 2004 065 057
- US-A1- 2009 107 806

## Beschreibung

Die vorliegende Erfindung betrifft eine Fördervorrichtung zum Fördern von Produkten nach dem Oberbegriff des Anspruchs 1. In der Linearmotortechnik werden u.a. Transportsysteme eingesetzt, die Schlitten aufweisen, die individuell zueinander bewegbar sind. Die Schlitten sind auf einer Führungsschiene geführt. Die Führungsschiene ist in der Regel als ein ortsfestes, umlaufend angeordnetes System ausgebildet. Die Schlitten werden von einem Linearantrieb in einer Transportrichtung angetrieben. Der Linearantrieb umfasst mehrere Spulen, die bei einem Anlegen von elektrischer Energie ein wechselndes Magnetfeld aufbauen. An den Schlitten sind Permanentmagnete befestigt, um den Antrieb des Schlittens zu gewährleisten. Da jede Spule individuell bestromt werden kann, ist ein individuelles Antreiben eines jeden Schlittens möglich.

Eine solche Transportvorrichtung ist beispielsweise in WO 2013/156177 A1 offenbart. Der darin beschriebene Schlitten weist im Wesentlichen eine umgekehrte U-Form mit zwei Schenkeln auf, wobei die zwei Schenkel starr miteinander verbunden sind. An einem unteren Ende der Schenkel sind Permanentmagnete angeordnet, die in Wirkverbindung mit Spulen der Linearantriebseinheit stehen. Der Schlitten weist eine Auflagefläche auf, auf der die Produkte angeordnet werden. Die Auflagefläche ist unveränderbar, was beispielsweise ein Aufnehmen von Produkten mit unterschiedlicher Größe erschwert.

In WO 2004/033304 A1 ist eine Transportvorrichtung beschrieben, die mehrere Trägerelemente aufweist. Die Trägerelemente weisen wiederum Seitenwände auf, die durch mechanische Mittel relativ zueinander verstellt werden können, um an verschiedene Produktgrößen oder -formen angepasst zu werden.

Ein weiteres verstellbares Trägerelement ist in EP 0 989 060 A2 offenbart. Das Trägerelement wird auf einer Fördervorrichtung geführt und weist eine verstellbare Seitenwand und ein starre Seitenwand auf. An einer Aufnahmeposition wird die verstellbare Seitenwand durch mechanische Mittel verstellt, sodass die Auflagefläche des Trägerelements vergrößert wird.

In EP 2 088 664 A1 sind zwei an einer Laufschiene geführte und mit Hilfe einer Linearmotoreinheit angetriebene Schlitten offenbart, die über eine Verbindungsstange und Kugelgelenkverbindungen derart miteinander verbunden sind, dass Relativbewegungen möglich sind, jedoch Relativbewegungen der Schlitten in Richtung der Laufschiene verhindert sind.

Schließlich ist in KR 2003 0013868 A, in US 2009/107806 A1, und in WO 2016/083394 A1 (Artikel 54(3) EPÜ Dokument) jeweils eine Fördervorrichtung nach dem Oberbegriff des Anspruchs 1 offenbart, welche zwei an einer Laufschiene geführte und mit Hilfe einer Linearmotoreinheit individuell angetriebene Schlitten offenbart, die über Verbindungselemente miteinander verbunden sind, wobei auch Relativbewegungen der Schlitten in Richtung der Laufschiene möglich sind.

Der vorliegenden Erfindung liegt die Aufgabe zugrunde, eine Fördervorrichtung zum Förddern von Produkten zu schaffen, bei der das Vergrößern oder Verkleinern der Auflagefläche des Schlittens einfach, schnell und energieeffizient erfolgen kann.

Diese Aufgabe wird durch die Merkmale des Anspruchs 1 gelöst.

Erfindungsgemäß umfasst die Fördervorrichtung zum Fördern von Produkten einen oder eine Mehrzahl von individuell zueinander bewegbaren Schlitten zur Aufnahme der Produkte und eine vorzugsweise ortsfeste und umlaufend angeordnete Führungsschiene, auf der der mindestens eine Schlitten geführt ist. Des Weiteren umfasst die Fördervorrichtung eine Linearmotorantriebseinheit zum Antreiben des mindestens einen Schlittens, wobei der mindestens eine Schlitten Permanentmagnete aufweist, die zumindest abschnittsweise mit Spulen der Linearmotorantriebseinheit in Wirkverbindung stehen. Der mindestens eine Schlitten weist ein erstes Teilelement und ein zweites Teilelement auf, die über mindestens ein Verbindungselement miteinander verbunden sind und relativ zueinander linear verschiebbar sind. Jedes der beiden Teilelemente weist mindestens einen Permanentmagneten auf, der zumindest abschnittsweise in Wirkverbindung mit den Spulen der Linearmotorantriebseinheit steht. Dabei weist das erste Teilelement Führungselemente auf, die an der Führungsschiene anliegen, während das zweite Teilelement keine an der Führungsschiene anliegenden Teile aufweist.

Das erste Teilelement und das zweite Teilelement sind individuell zueinander bewegbar und können somit einfach und schnell zueinander verstellt werden. Auf diese Weise kann jeder Schlitten ohne mechanische Hilfsmittel individuell auf die bestimmungsgemäße Verwendung, insbesondere die Form und Größe des zu transportierenden Produkts, angepasst werden. Darüber hinaus ist das zweite Teilelement nicht direkt an der Führungsschiene geführt. Das zweite Teilelement wird automatisch mit dem ersten Teilelement mitbewegt, wenn keine Wirkverbindung zwischen den Spulen der Linearmotorantriebseinheit und den Permanentmagneten des zweiten Teilelements vorliegt.

Von besonderem Vorteil ist es, wenn das mindestens eine Verbindungselement starr mit dem ersten Teilelement verbunden ist. Insofern wird die Verstellung des Abstands zwischen den Teilelementen auf einfache Weise durch eine relative Verschiebung des zweiten Teilelements erreicht.

Das erste und das zweite Teilelement sind vorzugsweise derart mit dem mindestens einen Verbindungselement verbunden, dass ein Verkippen des ersten und des zweiten Teilelements zueinander verhindert wird. Damit wird die relative Orientierung der Halteelemente zueinander jederzeit aufrechterhalten.

Vorzugsweise dient das mindestens eine Verbindungselement als Linearführung für das zweite Teilelement. Auf diese Weise kann in der Regel ohne ein weiteres Führungsmittel das zweite Teilelement auf geführte Weise relativ zum ersten Teilelement verschoben werden.

Besonders bevorzugt ist es, wenn das mindestens eine Verbindungselement eine Stange ist, an der das zweite Teilelement verschiebbar gelagert ist. In diesem Fall ist in dem zweiten Teilelement vorzugsweise mindestens eine Durchgangsbohrung vorhanden, in der die mindestens eine Stange aufgenommen ist.

Ebenfalls bevorzugt ist es, wenn das erste und das zweite Teilelement in einer Richtung parallel zu einer Längsmittelebene der Führungsschiene in Reihe angeordnet sind. Somit erfolgt die relative Verschiebung der beiden Teilelemente in Förderrichtung der Vorrichtung.

Damit die Produkte sicher auf den Teilelementen befördert werden können, weisen das erste und das zweite Teilelement vorzugsweise jeweils ein Halteelement zum Halten der Produkte zwischen den Halteelementen auf.

Vorzugsweise sind die Teilelemente zwischen einer Halteposition, in der das Halteelement des ersten Teilelements und das Halteelement des zweiten Teilelements einen ersten Abstand zueinander aufweisen, und einer Zuführ- oder Entnahmeposition, in der das Halteelement des ersten Teilelements und das Halteelement des zweiten Teilelements einen zweiten Abstand zueinander aufweisen, der größer als der erste Abstand ist, relativ zueinander bewegbar. In der Zuführ- oder Entnahmeposition können Produkte einfach zwischen die Halteelemente eingebracht oder daraus entnommen werden. Umgekehrt können die Produkte während des Transports in der Halteposition der Halteelemente fest zwischen den Halteelementen gehalten sein.

Vorzugsweise weist die Fördervorrichtung weiterhin eine Steuereinrichtung auf, die darauf ausgerichtet ist, die Spulen der Linearmotorantriebseinheit derart anzusteuern, dass das erste und das zweite Teilelement relativ zueinander verschoben werden. Durch die automatische Steuerung kann das Verschieben der beiden Teilelemente zueinander auf einfache und schnelle Weise erfolgen.

Besonders bevorzugt ist es, wenn der Schlitten ein Federelement aufweist, das derart angeordnet ist, dass es eine Vorspannung der beiden Teilelemente aufeinander zu bewirkt. Somit ist sichergestellt, dass eine gewisse Kraft überwunden werden muss, wenn man die beiden Teilelemente auseinander bewegen will. Außerdem wird das zweite Teilelement auf diese Weise bei fehlender anderweitiger Krafteinwirkung nahe an das erste Teilelement gedrückt.

Schließlich ist es bevorzugt, wenn das erste Teilelement ein Positionserfassungselement aufweist. Durch die Verbindung des zweiten Teilelements mit dem ersten Teilelement benötigt das zweite Teilelement kein Positionserfassungselement.

Weitere Eigenschaften und Vorteile der vorliegenden Erfindung ergeben sich aus der nachfolgenden Beschreibung unter Bezugnahme auf die Zeichnungen.
- Fig. 1: ist eine Perspektivansicht einer Ausführungsform eines Schlittens der erfindungsgemäßen Fördervorrichtung;
- Fig. 2: ist eine Schnittansicht des Schlittens aus Fig. 1;
- Fig. 3: ist eine Seitenansicht einer weiteren Ausführungsform von Schlitten der erfindungsgemäßen Fördervorrichtung; und
- Fig. 4 und 5: sind Seitenansichten einer weiteren Ausführungsform von Schlitten der erfindungsgemäßen Fördervorrichtung in zwei verschiedenen Stellungen der Teilelemente.

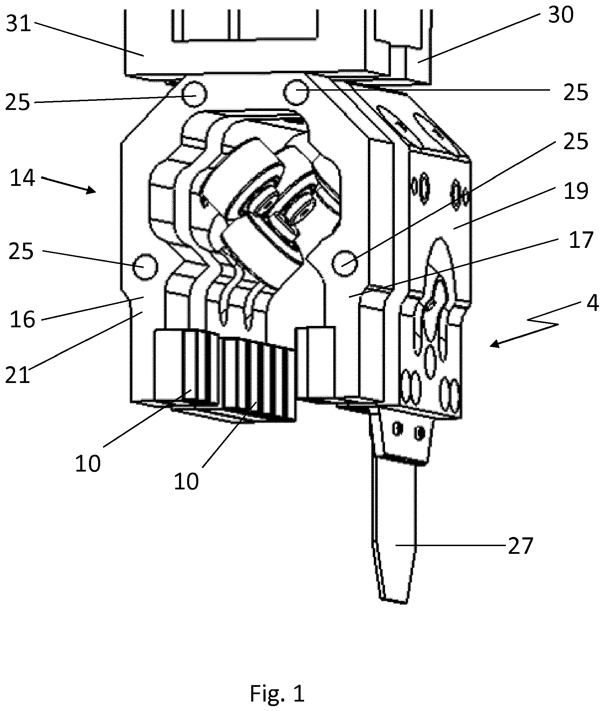

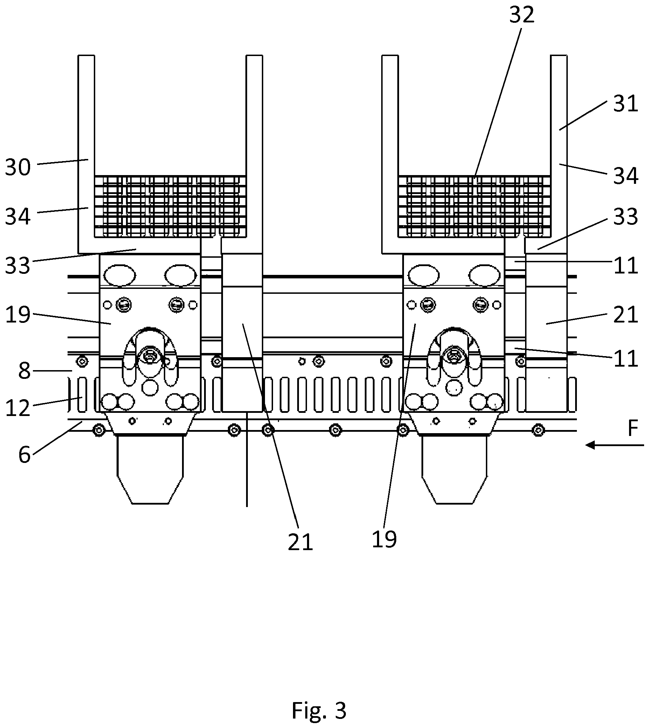

Fig. 1 zeigt eine Möglichkeit des grundsätzlichen Aufbaus eines Schlittens 4 als Teil einer erfindungsgemäßen Fördervorrichtung. Wie in Fig. 3 dargestellt ist, ist der mindestens eine Schlitten 4 der Fördervorrichtung auf einer vorzugsweise ortsfesten und vorzugsweise umlaufend angeordneten Führungsschiene 2 gelagert und wird zum Fördern eines Produkts 32 entlang der Führungsschiene 2 bewegt. In den Ausführungsbeispielen sind die Produkte 32 als Blisterverpackungen oder Stapel von Blisterverpackungen ausgebildet. Die Erfindung ist aber auf alle möglichen anderen Produktformen anwendbar. Auch wenn lediglich ein Schlitten 4 vorhanden sein kann, werden in der Regel mehrere Schlitten 4 gleichzeitig auf derselben Führungsschiene 2 verfahren. Das Material der Führungsschiene 2 und des Schlittens 4 ist vorzugsweise Aluminium.

Der mindestens eine Schlitten 4 wird entlang einer Förderrichtung F (siehe Fig. 3) entlang der Führungsschiene 2 verfahren. In Fig. 3 ist ein gerader Streckenabschnitt der Führungsschiene 2 dargestellt und die Förderrichtung F verläuft geradlinig von rechts nach links. Die Förderrichtung F kann aber auch in der umgekehrten Richtung verlaufen. Ebenso ist eine veränderliche Förderrichtung F denkbar, wenn der mindestens eine Schlitten 4 einer Bahn mit Kurvenabschnitten folgt. Der Schlitten 4 kann demnach sowohl eine geradlinige Bewegung als auch eine Kurvenbewegung ausführen. Durch eine Kombination von Gerade und Kurven können in einer Ebene nahezu beliebige Bahnformen realisiert werden. Es sind hier viele verschiedene Ausgestaltungen möglich.

Zum Antrieb des mindestens einen Schlittens 4 dient eine in Fig. 3 dargestellte Linearmotorantriebseinheit 6, welche üblicherweise als Motorspulenpaket ausgebildet ist. Die Linearmotorantriebseinheit 6 liegt im Bereich der Führungsschiene 2. Die Linearmotorantriebseinheit 6 umfasst viele aneinander gereihte Spulen 8, vorzugsweise aus Kupfer, die einzeln bestromt werden können. Der mindestens eine Schlitten 4 weist wiederum, wie u.a. aus Fig. 1 ersichtlich ist, mindestens zwei Permanentmagnete 10 auf, die mit der Linearmotorantriebseinheit 6 in Wirkverbindung stehen. Die Lagerung und Führung des Schlittens 4 entlang der Führungsschiene 2 erfolgt über eine Mehrzahl von Führungselementen 11, die vorzugsweise Laufrollen sind. Diese Laufrollen sind vorzugsweise aus Kunststoff gebildet.

Bei Bestromung einer Spule 8 entstehen lokale Magnetfelder und somit ein Kraftfluss zwischen der Spule 8 und den Permanentmagneten 10. Durch intelligentes Ansteuern und Bestromen der einzelnen Spulen 8 kann ein "wanderndes" Magnetfeld erzeugt werden, welches jeden einzelnen Schlitten 4 unabhängig von den anderen Schlitten 4 bewegen kann. Aufgrund der beidseitig neben der Linearmotorantriebseinheit 6 angeordneten Permanentmagnete 10 wird die direkte Kraftwirkung zwischen jeder Spule 8 und den Permanentmagneten 10 theoretisch neutralisiert und es verbleibt lediglich eine Antriebskraft, welche auf jeden Schlitten 4 wirkt.

Die größte Anziehungskraft besteht zwischen den Permanentmagneten 10 und den Statorzähnen 12 (siehe Fig. 3) zwischen den Spulen 8. Die eisenhaltigen Statorzähne 12 haben die Funktion, die Magnetfelddichte zu erhöhen. Theoretisch könnte die Linearmotorantriebseinheit 6 auch eisenlos gebaut werden, allerdings verringert sich dadurch die erreichbare Antriebskraft.

Der mindestens eine Schlitten 4 muss robust gelagert werden, um den Spalt zwischen Spule 8 und Permanentmagneten 10 auf beiden Seiten möglichst konstant halten zu können. Der Schlitten 4 weist hierzu einen im Wesentlichen hufeisenförmigen oder umgekehrt U-förmigen Grundkörper 14 auf, von dem die Führungselemente 11 nach innen abragen. Die mindestens zwei Permanentmagnete 10 sind dabei an der Innenseite des Grundkörpers 14 angeordnet und umgeben die Linearmotorantriebseinheit 6 planparallel von beiden Seiten. Vorzugsweise sind mehrere Permanentmagnete 10 auf beiden Seiten des Schlittens 4 vorgesehen.

Die Führungselemente 11 liegen auf der Führungsschiene 2 an und führen den Schlitten 4 auf der Führungsschiene 2. Die von der Längsmittelebene betrachtet linke und rechte Schlittenhälfte in Fig. 1 weisen demnach jeweils drei Führungselemente 11 auf. Denkbar sind aber auch weniger oder mehr als drei Führungselemente 11. Neben der hier beschriebenen Gestaltung des Schlittens 4 sind viele weitere Formen und Abmessungen des Schlittens 4 im Rahmen der Erfindung denkbar.

Wie aus den Fig. 1 bis 5 ersichtlich ist, weist der Schlitten 4 in jedem Fall ein erstes Teilelement 19 und ein zweites Teilelement 21 auf. Das erste und das zweite Teilelement 19, 21 sind in Förderrichtung F der Fördervorrichtung in Reihe angeordnet. Es spielt keine Rolle, ob das erste Teilelement 19 oder das zweite Teilelement 21 in Förderrichtung F vorangestellt ist. Das zweite Teilelement 21 ist vorzugsweise in Förderrichtung F schmaler ausgebildet als das erste Teilelement 19. Das erste Teilelement 19 weist die Führungselemente 11 auf, die an der Führungsschiene 2 anliegen, während das zweite Teilelement 21 keine Führungselemente 11 und auch sonst keine an der Führungsschiene 2 anliegenden Teile aufweist.

Das erste Teilelement 19 und das zweite Teilelement 21 sind mittels mindestens eines Verbindungselements 23 miteinander verbunden und in Förderrichtung F relativ zueinander linear verschiebbar. In den vorliegenden Ausführungsbeispielen weist der Schlitten 4 vier Verbindungselemente 23 auf. Vorstellbar ist es aber auch, dass mehr oder weniger als vier Verbindungselemente 23 vorliegen.

Das mindestens eine Verbindungselement 23 ist vorzugsweise starr mit dem ersten Teilelement 19 verbunden. Das zweite Teilelement 21 ist derart mit dem mindestens einen Verbindungselement 23 verbunden, dass ein Verkippen des zweiten Teilelements 21 relativ zum ersten Teilelement 19 in alle Richtungen verhindert ist. Zusätzlich dient das mindestens eine Verbindungselement 23 als Linearführung für das zweite Teilelement 21. Wenn mehrere Verbindungselemente 23 pro Schlitten 4 vorliegen, sind diese vorzugsweise als Stangen ausgebildet, an denen das zweite Teilelement 21 verschiebbar gelagert ist. Wenn nur ein Verbindungselement 23 pro Schlitten 4 vorliegt, ist dieses vorzugsweise plattenförmig ausgestaltet, um ein seitliches Verkippen des zweiten Teilelements 21 zu verhindern. Dem Fachmann sind aber auch viele andere Möglichkeiten des mindestens einen Verbindungselements 23 bekannt.

Das mindestens eine Verbindungselement 23 ist im zweiten Teilelement 21 vorzugsweise in mindestens einer Durchgangsbohrung 25 aufgenommen. In den vorliegenden Ausführungsformen sind Durchgangsbohrungen 25 jeweils in einem oberen Bereich und in einem mittleren Bereich der beiden Schenkel 16, 17 des zweiten Teilelements 21 ausgebildet. Idealerweise sind die Durchgangsbohrungen 25 symmetrisch bezüglich der Längsmittelebene des Schlittens 4 angeordnet. Es sind aber auch andere Möglichkeiten vorstellbar, wie die Verbindungselemente 23 angeordnet werden können, um die beiden Teilelemente 19, 21 miteinander zu verbinden.

In unteren Bereichen des ersten Teilelements 19 und des zweiten Teilelements 21 sind jeweils die Permanentmagnete 10 angeordnet. Der mindestens eine Permanentmagnet 10 des ersten Teilelements 19 steht immer in Wirkverbindung mit den Spulen 8 der Linearmotorantriebseinheit 6. Dadurch wird der Schlitten 4 vorwärtsbewegt. Der mindestens eine Permanentmagnet 10 des zweiten Teilelements 21 steht hingegen nur abschnittsweise in Wirkverbindung mit den Spulen 8 der Linearmotorantriebseinheit 6. Eine Wirkverbindung kann hier nur in geradlinigen Abschnitten der Führungsschiene 2 bestehen. Ein Verschieben des zweiten Teilelements 21 relativ zum ersten Teilelement 19 erfolgt dann durch geeignete Ansteuerung der Spulen 8 mittels einer Steuereinrichtung 38 und durch die Wirkung des von den Spulen 8 erzeugten Magnetfelds auf die Permanentmagnete 10 des zweiten Teilelements 21. Die Verbindungselemente 23 wirken beim Verschieben einem Verkippen des zweiten Teilelements 21 entgegen.

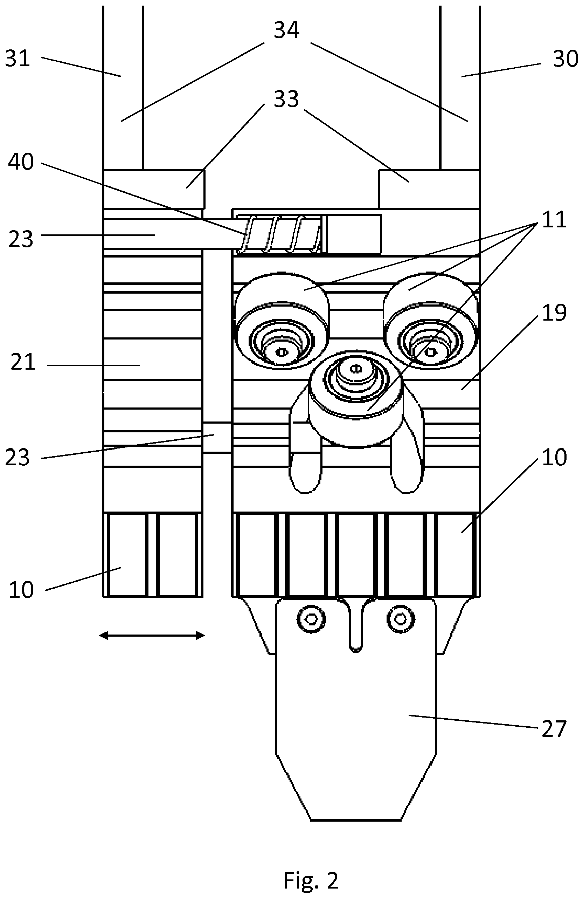

Bevorzugt weist der Schlitten 4 auch ein Federelement 40 (siehe Fig. 2) auf, das derart angeordnet ist, dass es eine Vorspannung der beiden Teilelemente 19, 21 aufeinander zu bewirkt. Auf diese Weise kann das zweite Teilelement 21 in Richtung des ersten Teilelements 19 gezogen werden oder an ihm gehalten werden, wenn keine Wirkverbindung zwischen der Linearmotorantriebseinheit 6 und den Permanentmagneten 10 des zweiten Teilelements 21 besteht. Dies ist beispielsweise der Fall in einem Kurvenabschnitt der Führungsschiene 2, in dem das zweite Teilelement 21 von der Führungsschiene 2 absteht.

Wie aus Fig. 1 ersichtlich ist, kann das erste Teilelement 19 auch ein Positionserfassungselement 27 aufweisen. Da das zweite Teilelement 21 über das mindestens eine Verbindungselement 23 mit dem ersten Teilelement 19 verbunden ist, benötigt das zweite Teilelement 21 nicht unbedingt ein Positionserfassungselement 27. Sollte auch ein Positionserfassungselement 27 an dem zweiten Teilelement 21 erforderlich sein, so kann dies dort jederzeit angebracht werden.

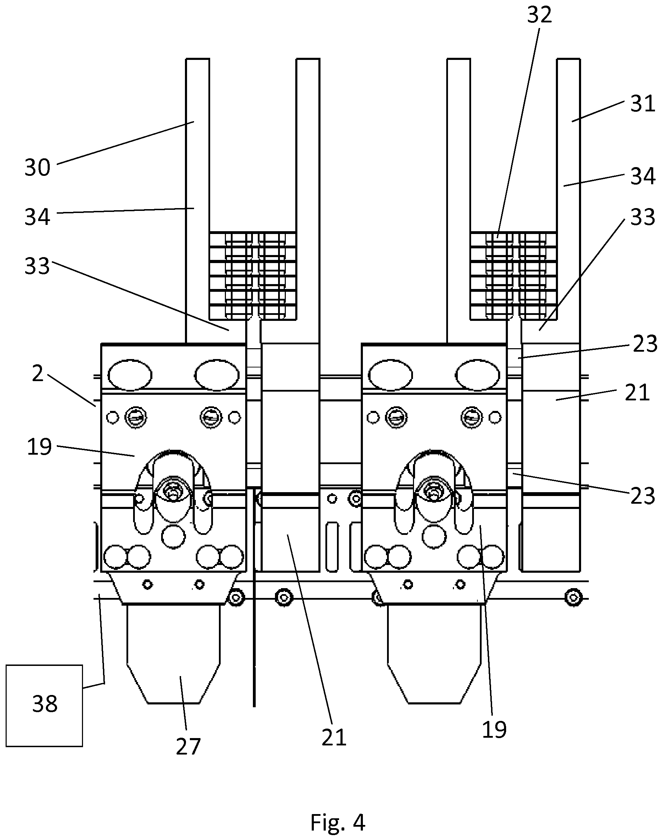

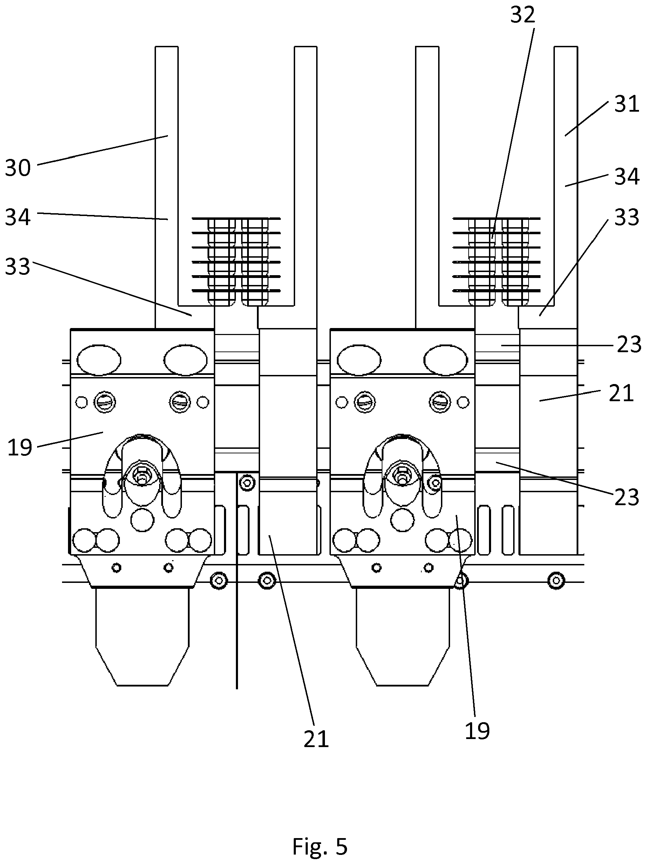

In einem von der Führungsschiene 2 abgewandten Mittelbereich jedes der beiden Teilelemente 19, 21 sind normalerweise Halteelemente 30, 31 angeordnet, die zwischen sich einen Produktaufnahmeraum für zu transportierende Produkte 32 bilden. Jedes Halteelement 30, 31 weist in den dargestellten Ausführungsformen jeweils zwei Schenkel 33, 34 auf, die im Wesentlichen senkrecht zueinander ausgebildet sind, sodass jedes Halteelement 30, 31 im Wesentlichen eine L-Form bildet. Ein Schenkel 33 dient hier jeweils als Auflagefläche für die Produkte 32. Wie aus Fig. 4 und 5 hervorgeht, kann es vorteilhaft sein, wenn das Halteelement 30 am ersten Teilelement 19 an der dem zweiten Teilelement 21 zugewandten Seite angeordnet ist. Ebenso kann das Halteelement 30 am ersten Teilelement 19 an der dem zweiten Teilelement 21 abgewandten Seite angeordnet sein, siehe Fig. 3. In diesem Fall kann der horizontale Schenkel 33 länger ausgebildet sein. Schließlich kann das Halteelement 30 am ersten Teilelement 19 auch in der Mitte des ersten Teilelements 19 ausgebildet sein.

Die Form, Orientierung und Abmessungen der Halteelemente 30, 31 sind jedoch beliebig. Insbesondere kann auch eine i-Form vorliegen. In diesem Fall dient eine Fläche der beiden Teilelemente 19, 21 jeweils als Auflagefläche für die Produkte 32.

Wie bereits oben erwähnt umfasst die Fördervorrichtung eine Steuereinrichtung 38. Die Steuereinrichtung 38 ist darauf ausgerichtet, die Spulen 8 der Linearmotorantriebseinheit 6 derart anzusteuern, dass das erste Teilelement 19 und das zweite Teilelement 21 in geraden Bereichen der Führungsschiene 2 relativ zueinander verschoben werden können.

Hierdurch kann zum einen eine Anpassung an die Form oder Abmessungen der zu transportierenden Produkte 32 erfolgen. Zum anderen können aber, wie in Fig. 4 und 5 dargestellt ist, das erste Teilelement 19 und das zweite Teilelement 21 zwischen einer Halteposition und einer Zuführ- bzw. Entnahmeposition relativ zueinander bewegt werden.

In Fig. 4 ist eine Halteposition dargestellt. In der Halteposition weisen das Halteelement 30 des ersten Teilelements 19 und das Halteelement 31 des zweiten Teilelements 21 einen ersten Abstand zueinander auf. Der Abstand ist beispielsweise so groß gewählt, dass die Produkte 32 zwischen den Haltelementen 30, 31 fest aufgenommen sind. In der Zuführ- oder Entnahmeposition, die in Fig. 5 dargestellt ist, weisen das Halteelement 30 des ersten Teilelements 19 und das Halteelement 31 des zweiten Teilelements 21 einen zweiten Abstand zueinander auf. Der zweite Abstand ist größer als der erste Abstand, sodass die Produkte 32 leicht zwischen die Halteelemente 30, 31 der beiden Teilelemente 19, 21 eingeführt bzw. daraus entnommen werden können.

In den bisher beschriebenen Ausführungsformen wird durch die relative Verschiebung der Teilelemente 19, 21 ein Produktaufnahmeraum, vorzugsweise zwischen zwei Halteelementen 30, 31, vergrößert oder verkleinert. Ebenso können durch die relative Verschiebung der Teilelemente 19, 21 andere Funktionen bzw. Mechanismen aktiviert werden oder allgemein Kräfte erzeugt werden. Denkbar sind z.B. eine Rotation der Packgutauflage, das Erzeugen eines Vakuums, eine Vertikalbewegung der Packgutauflage etc.

## Patentansprüche

1. Fördervorrichtung zum Fördern von Produkten (32) mit
mindestens einem individuell bewegbaren Schlitten (4) zur Aufnahme von Produkten (32),
einer Führungsschiene (2), auf der der mindestens eine Schlitten (4) geführt ist, und
einer Linearmotorantriebseinheit (6) zum Antreiben des mindestens einen Schlittens (4),
wobei der mindestens eine Schlitten (4) Permanentmagnete (10) aufweist, die mit Spulen (8) der Linearmotorantriebseinheit (6) zumindest abschnittsweise in Wirkverbindung stehen,
wobei der mindestens eine Schlitten (4) ein erstes Teilelement (19) und ein zweites Teilelement (21) aufweist, die über mindestens ein Verbindungselement (23) miteinander verbunden und relativ zueinander linear verschiebbar sind, wobei das erste Teilelement (19) und das zweite Teilelement (21) jeweils mindestens einen Permanentmagneten (10) aufweisen, der zumindest abschnittsweise in Wirkverbindung mit den Spulen (8) der Linearmotorantriebseinheit (6) steht,
**dadurch gekennzeichnet, dass**
das erste Teilelement (19) Führungselemente (11) aufweist, die an der Führungsschiene (2) anliegen, während das zweite Teilelement (21) keine an der Führungsschiene (2) anliegenden Teile aufweist.

2. Fördervorrichtung nach Anspruch 1, **dadurch gekennzeichnet, dass** das mindestens eine Verbindungselement (23) starr mit einem der Teilelemente (19), vorzugsweise dem ersten Teilelement (19), verbunden ist.

3. Fördervorrichtung nach Anspruch 1 oder 2, **dadurch gekennzeichnet, dass** das erste Teilelement (19) und das zweite Teilelement (21) derart mit dem mindestens einen Verbindungselement (23) verbunden sind, dass ein Verkippen des ersten Teilelements (19) und des zweiten Teilelements (21) zueinander verhindert ist.

4. Fördervorrichtung nach einem der vorangehenden Ansprüche, **dadurch gekennzeichnet, dass** das mindestens eine Verbindungselement (23) als Linearführung für das zweite Teilelement (21) dient.

5. Fördervorrichtung nach Anspruch 4, **dadurch gekennzeichnet, dass** das mindestens eine Verbindungselement (23) eine Stange ist, an der das zweite Teilelement (21) verschiebbar gelagert ist.

6. Fördervorrichtung nach einem der vorangehenden Ansprüche, **dadurch gekennzeichnet, dass** das erste Teilelement (19) und das zweite Teilelement (21) in einer Richtung parallel zu einer Längsmittelebene der Führungsschiene (2) in Reihe angeordnet sind.

7. Fördervorrichtung nach einem der vorangehenden Ansprüche, **dadurch gekennzeichnet, dass** das erste Teilelement (19) und das zweite Teilelement (21) jeweils ein Halteelement (30, 31) zum Bilden eines Produktaufnahmeraums zwischen den Halteelementen (30, 31) aufweisen.

8. Fördervorrichtung nach Anspruch 7, **dadurch gekennzeichnet, dass** die beiden Teilelemente (19, 21) zwischen einer Halteposition, in der das Halteelement (30) des ersten Teilelements (19) und das Halteelement (31) des zweiten Teilelements (21) einen ersten Abstand zueinander aufweisen, und einer Zuführ- oder Entnahmeposition, in der das Halteelement (30) des ersten Teilelements (19) und das Halteelement (31) des zweiten Teilelements (21) einen zweiten Abstand zueinander aufweisen, der größer als der erste Abstand ist, relativ zueinander bewegbar sind.

9. Fördervorrichtung nach einem der vorangehenden Ansprüche, **dadurch gekennzeichnet, dass** sie weiterhin eine Steuereinrichtung (38) aufweist, die darauf ausgerichtet ist, die Spulen (8) der Linearmotorantriebseinheit (6) derart anzusteuern, dass das erste Teilelement (19) und das zweite Teilelement (21) relativ zueinander verschoben werden.

10. Fördervorrichtung nach einem der vorangehenden Ansprüche, **dadurch gekennzeichnet, dass** der Schlitten (4) ein Federelement (40) aufweist, das derart angeordnet ist, dass es eine Vorspannung der beiden Teilelemente (19, 21) aufeinander zu bewirkt.

11. Fördervorrichtung nach einem der vorangehenden Ansprüche, **dadurch gekennzeichnet, dass** das erste Teilelement (19) ein Positionserfassungselement (27) aufweist.

## Claims

1. Conveyor device for transporting products (32)
comprising at least one individually movable slide carriage (4) for receiving products (32),
a guide rail (2) on which the at least one slide carriage (4) is guided, and a linear motor drive unit (6) for driving the at least one slide carriage (4), wherein the at least one slide carriage (4) has permanent magnets (10) which are in active connection in at least some sections with coils (8) of the linear motor drive unit (6),
wherein the at least one slide carriage (4) has a first element part (19) and a second element part (21) which are connected to one another by means of at least one connecting element (23) and which are displaceable linearly relative to one another, wherein the first element part (19) and the second element part (21) each have at least one permanent magnet (10) which is in active connection in at least some sections with the coils (8) of the linear motor drive unit (6),
**characterised in that**
the first element part (19) has guide elements (11) which bear against the guide rail (2), whilst the second element part (21) has no parts bearing against the guide rail (2).

2. Conveyor device according to claim 1 **characterised in that** the at least one connecting element (23) is rigidly connected to one of the element parts (19), preferably to the first element part (19).

3. Conveyor device according to claim 1 or 2 **characterised in that** the first element part (19) and the second element part (21) are connected to the at least one connecting element (23) in such a way that the first element part (19) is prevented from tilting relative to the second element part (21).

4. Conveyor device according to one of the preceding claims **characterised in that** the at least one connecting element (23) serves as a linear guide for the second element part (21).

5. Conveyor device according to claim 4 **characterised in that** the at least one connecting element (23) is a rod on which the second element part (21) is displaceably mounted.

6. Conveyor device according to one of the preceding claims **characterised in that** the first element part (19) and the second element part (21) are arranged in series in a direction parallel to a longitudinal central plane of the guide rail (2).

7. Conveyor device according to one of the preceding claims **characterised in that** the first element part (19) and the second element part (21) each have a holding element (30, 31) to form a product receiving chamber between the holding elements (30, 31).

8. Conveyor device according to claim 7 **characterised in that** the two element parts (19, 21) can be moved relative to one another between a holding position, in which the holding element (30) of the first element part (19) and the holding element (31) of the second element part (21) have a first spacing from one another, and a supply or removal position, in which the holding element (30) of the first element part (19) and the holding element (31) of the second element part (21) have a second spacing relative to one another which is greater than the first spacing.

9. Conveyor device according to one of the preceding claims **characterised in that** it furthermore has a control device (38) which is set up to control the coils (8) of the linear motor drive unit (6) in such a way that the first element part (19) and the second element part (21) are displaced relative to one another.

10. Conveyor device according to one of the preceding claims **characterised in that** the slide carriage (4) has a spring element (40) which is arranged in such a way that it pretensions the two element parts (19, 21) relative to one another.

11. Conveyor device according to one of the preceding claims **characterised in that** the first element part (19) has a position detection element (27).

## Revendications

1. Dispositif de transport destiné à transporter des produits (32) comprenant :
au moins un chariot (4) mobile individuellement destiné à recevoir les produits (32),
un rail de guidage (2), qui est guidé sur le ou les chariots (4), et
une unité d'entraînement à moteur linéaire (6) destinée à entraîner le ou les chariots (4),
le ou les chariots (4) comprenant des aimants permanents (10) qui sont au moins en partie en liaison fonctionnelle avec des bobines (8) de l'unité d'entraînement à moteur linéaire (6),
le ou les chariots (4) comprenant un premier élément partiel (19) et un deuxième élément partiel (21), qui sont reliés ensemble par au moins un élément de liaison (23) et qui peuvent être déplacés linéairement l'un par rapport à l'autre, le premier élément partiel (19) et le deuxième élément partiel (21) comportant chacun au moins un aimant permanent (10) qui est au moins en partie en liaison fonctionnelle avec les bobines (8) de l'unité d'entraînement à moteur linéaire (6),
**caractérisé en ce que**
le premier élément partiel (19) comprend des éléments de guidage (11) qui s'appliquent contre le rail de guidage (2), tandis que le deuxième élément partiel (21) ne présente pas de parties s'appliquant contre le rail de guidage (2).

2. Dispositif de transport selon la revendication 1, **caractérisé en ce que** l'élément ou les éléments de liaison (23) sont reliés solidement à l'un des éléments partiels (19), de préférence au premier élément partiel (19).

3. Dispositif de transport selon la revendication 1 ou 2, **caractérisé en ce que** le premier élément partiel (19) et le deuxième élément partiel (21) sont reliés à l'élément ou aux éléments de liaison (23) de telle manière qu'un basculement du premier élément partiel (19) et du deuxième élément partiel (21) l'un par rapport à l'autre est empêché.

4. Dispositif de transport selon l'une quelconque des revendications précédentes, **caractérisé en ce que** l'élément ou les éléments de liaison (23) servent de guidage linéaire au deuxième élément partiel (21).

5. Dispositif de transport selon la revendication 4, **caractérisé en ce que** l'élément ou les éléments de liaison (23) sont une barre sur laquelle le deuxième élément partiel (21) est monté mobile.

6. Dispositif de transport selon l'une quelconque des revendications précédentes, **caractérisé en ce que** le premier élément partiel (19) et le deuxième élément partiel (21) sont agencés en série dans une direction parallèle à un plan longitudinal médian du rail de guidage (2).

7. Dispositif de transport selon l'une quelconque des revendications précédentes, **caractérisé en ce que** le premier élément partiel (19) et le deuxième élément partiel (21) présentent chacun un élément de retenue (30, 31) destiné à former un espace de réception de produit entre les éléments de retenue (30, 31).

8. Dispositif de transport selon la revendication 7, **caractérisé en ce que** les deux éléments partiels (19, 21) peuvent être déplacés l'un par rapport à l'autre entre une position de retenue, dans laquelle l'élément de retenue (30) du premier élément partiel (19) et l'élément de retenue (31) du deuxième élément partiel (21) sont espacés l'un de l'autre d'un premier écart, et une position d'amenée ou de prélèvement, dans laquelle l'élément de retenue (30) du premier élément partiel (19) et l'élément de retenue (31) du deuxième élément partiel (21) sont espacés l'un de l'autre d'un deuxième écart qui est supérieur au premier écart.

9. Dispositif de transport selon l'une quelconque des revendications précédentes, **caractérisé en ce qu'**il comprend en outre un système de commande (38) qui est conçu pour commander les bobines (8) de l'unité d'entraînement à moteur linéaire (6) de telle manière que le premier élément partiel (19) et le deuxième élément partiel (21) sont déplacés l'un par rapport à l'autre.

10. Dispositif de transport selon l'une quelconque des revendications précédentes, **caractérisé en ce que** le chariot (4) comprend un élément ressort (40) qui est agencé de manière à entraîner une précontrainte des deux éléments partiels (19, 21) l'un sur l'autre.

11. Dispositif de transport selon l'une quelconque des revendications précédentes, **caractérisé en ce que** le premier élément partiel (19) comprend un élément de détection de position (27).
